(19) Europäisches Patentamt
European Patent Office
Office européen des brevets

(11) **EP 3 894 923 B1**

(12) **EUROPÄISCHE PATENTSCHRIFT**

(45) Veröffentlichungstag und Bekanntmachung des Hinweises auf die Patenterteilung:
**08.11.2023   Patentblatt 2023/45**

(21) Anmeldenummer: **19832054.1**

(22) Anmeldetag: **17.12.2019**

(51) Internationale Patentklassifikation (IPC):
**G02B 9/60** *(2006.01)*      **G02B 13/04** *(2006.01)*

(52) Gemeinsame Patentklassifikation (CPC):
**G02B 13/04; G02B 9/60**

(86) Internationale Anmeldenummer:
**PCT/EP2019/085673**

(87) Internationale Veröffentlichungsnummer:
**WO 2020/127280 (25.06.2020 Gazette 2020/26)**

(54) **FOTOGRAFISCHES WEITWINKELOBJEKTIV**

PHOTOGRAPHIC WIDE-ANGLE LENS

OBJECTIF PHOTOGRAPHIQUE GRAND-ANGLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2018   DE 102018132472**

(43) Veröffentlichungstag der Anmeldung:
**20.10.2021   Patentblatt 2021/42**

(73) Patentinhaber: **Leica Camera AG**
**35578 Wetzlar (DE)**

(72) Erfinder:
• **ROTH, Stefan**
  **35633 Lahnau (DE)**
• **KELLER, Kathrin**
  **35633 Lahnau (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**EP-A1- 2 993 512     US-A- 5 835 286**

**Beschreibung**

Die vorliegende Erfindung betrifft ein Weitwinkelobjektiv für fotografische Anwendungen.

Allgemein bekannt sind Weitwinkelobjektive vom Retrofokustyp mit einer Frontgruppe mit negativer Brechkraft und einer Hintergruppe mit positiver Brechkraft.

Weiterhin bekannt sind symmetrische Objektivkonstruktionen mit einer Mittelgruppe mit positiver Brechkraft und einer Vordergruppe und einer Hintergruppe, welche jeweils eine negative Brechkraft aufweisen. Derartige Konstruktionen eignen sich insbesondere für spiegellose Kameras.

Ebenfalls für den Einsatz an spiegellosen Kameras sind quasi-symmetrische Konstruktionen bekannt, bei denen eine Front-, Mittel- und Hintergruppe mit jeweils positiver Brechkraft vorgesehen ist.

Für eine Verwendung an spiegellosen Kameras sind außerdem Weitwinkelobjektive vom kompakten abgewandelten Retrofokustyp mit einer während des Fokussierens konstanten Baulänge bekannt. Ein derartiges Objektiv ist beispielsweise in DE 10 2014 104 457 B3 beschrieben. Das dort offenbarte neunlinsige Objektiv weist jedoch aufgrund der dort vorgesehenen Innenfokussierung eine große Baulänge auf.

In DE 2 160 628 A ist ein achtlinsiges Weitwinkelobjektiv mit zwei asphärischen Flächen beschrieben.

Aus EP 2 194 412 A1 ist ein Mikroskopobjektiv mit drei Linsengruppen bekannt, wobei die Hintergruppe eine negative Brechkraft aufweist und zusätzlich zwischen der Mittelgruppe und der Hintergruppe ein diffraktives optisches Element vorgesehen ist.

In DE 10 2004 008 997 A1 ist ein siebenlinsiges fotografisches Objektiv vom modifizierten Doppelgauß-Typ offenbart.

EP 2 993 512 A1 beschreibt ein Weitwinkelobjektiv mit zehn Linsen, wobei mittig zwischen der fünften und sechsten Linse eine Blende angeordnet ist. In Lichtrichtung vor und nach der Blende sind abwechselnd Linsen positiver und negativer Brechkraft angeordnet, wobei die in Lichtrichtung vor der Blende liegenden Linsen eine negative Gesamtbrechkraft aufweisen.

US 5,835,286 offenbart ein fotografisches Objektiv, umfassend in einer Reihenfolge von einem objektseitigen zu einem bildseitigen Ende eine Vordergruppe positiver Gesamtbrechkraft mit wenigstens vier Linsen, eine Mittelgruppe positiver Gesamtbrechkraft mit wenigstens drei Linsen und eine Hintergruppe mit wenigstens drei Linsen.

Sehr kompakte Abmessungen werden nur mit Objektiven erreicht, die einen symmetrischen oder quasi-symmetrischen Aufbau aufweisen. Bei Retrofokus-Konstruktionen sind kompakte Abmessungen prinzipbedingt nicht möglich. Zudem ist bedingt durch den asymmetrischen Aufbau die Korrektur von Koma, Verzeichnung und Farbquerfehler nur unvollständig.

Allgemein sind bei der Konstruktion kompakter Weitwinkelobjektive hohe Brechkräfte in den Einzelelementen erforderlich. Dies führt jedoch zu Aberrationen dritter und höherer Ordnung, die zu nicht korrigierten Restfehlern im Bild führen, was sich ungünstig auf den Bildkontrast auswirkt.

Bei kompakten Objektiven ist häufig die Korrektur der Bildfeldwölbung, des Astigmatismus, der Verzeichnung und des Farbfehlers nur eingeschränkt möglich.

Es ist die Aufgabe der vorliegenden Erfindung, ein fotografisches Weitwinkelobjektiv anzugeben, welches kompakte Abmessungen aufweist und eine besonders gute Korrektion aller Bildfehler aufweist.

Die Lösung der Aufgabe erfolgt durch ein fotografisches Weitwinkelobjektiv mit den Merkmalen des Anspruchs 1. Das erfindungsgemäße Weitwinkelobjektiv umfasst in einer Reihenfolge von einem objektivseitigen zu einem bildseitigen Ende eine Vordergruppe positiver Gesamtbrechkraft mit wenigstens vier Linsen, eine Mittelgruppe positiver Gesamtbrechkraft mit wenigstens drei Linsen und eine Hintergruppe positiver Gesamtbrechkraft mit wenigstens drei Linsen, wobei der Quotient aus der Brennweite der Vordergruppe und der Gesamtbrennweite des Objektivs zwischen 2,28 und 2,79 beträgt, der Quotient aus der Brennweite der Mittelgruppe und der Gesamtbrennweite des Objektivs zwischen 3,02 und 3,69 beträgt, und der Quotient aus der Brennweite der Hintergruppe und der Gesamtbrennweite des Objektivs zwischen 3,50 und 4,29 beträgt. Insgesamt weist das erfindungsgemäße Weitwinkelobjektiv also mindestens zehn Linsen auf.

Im Vergleich zu Objektivkonstruktionen vom Retrofokustyp weist das erfindungsgemäße Weitwinkelobjektiv sehr kompakte Abmessungen, insbesondere hinsichtlich der Baulänge auf und eignet sich somit insbesondere für die Verwendung mit digitalen spiegellosen Systemkameras.

Gemäß einer vorteilhaften Ausführungsform umfassen die Vordergruppe, die Mittelgruppe und die Hintergruppe jeweils wenigstens eine Linse mit negativer Brechkraft und wenigstens eine Linse mit positiver Brechkraft.

Vorteilhafterweise weist eine Mehrzahl der Linsen mit negativer Brechkraft einen Brechungsindex kleiner oder gleich 1,70, eine Abbe-Zahl zwischen 38 und 45 und/oder eine Abweichung der relativen Teildispersion $\Delta P_{g,F}$ von der Normalgeraden kleiner oder gleich -0,0035 auf. Für die Linsen mit negativer Brechkraft werden somit bevorzugt Gläser mit einem relativ niedrigen Brechungsindex, einer relativ niedrigen Abbe-Zahl und einer negativen Abweichung der relativen Teildispersion von der Normalgeraden verwendet. Die relative Teildispersion $P_{g,F}$ ist definiert durch:

$$P_{g,F} = \frac{n_g - n_F}{n_F - n_C}$$

wobei $n_F$ der Brechungsindex bei der Fraunhofer-Linie F (Wellenlänge 486,13 nm), $n_g$ der Brechungsindex bei der Fraunhofer-Linie g (Wellenlänge 435,83 nm) und $n_c$ der Brechungsindex bei der Fraunhofer-Linie C (Wellenlänge 656,28 nm) ist.

Die Abweichung der relativen Teildispersion $\Delta P_{g,F}$ von der Normalgeraden ist definiert durch:

$$\Delta P_{g,F} = P_{g,F} - (0{,}6438 - 0{,}001682 \cdot v_d),$$

wobei $v_d$ die Abbe-Zahl bei der Fraunhofer-Linie d (Wellenlänge 587,56 nm) ist.

Vorteilhafterweise umfasst die Mehrzahl der Linsen mit negativer Brechkraft alle Linsen mit negativer Brechkraft mit Ausnahme einer am bildseitigen Ende der Hintergruppe angeordneten Linse mit negativer Brechkraft.

Durch die Verwendung von Gläsern mit einer oder mehreren der genannten Eigenschaften können Farbfehler im primären und sekundären Spektrum korrigiert werden. Die letzte Linse der Hintergruppe kann von einer oder mehrerer dieser Bedingungen zugunsten einer asphärischen Ausführung durch Präzisionsblankpressen ausgenommen sein.

Gemäß einer weiteren vorteilhaften Ausführungsform ist die Hintergruppe als Floatingelement ausgebildet, welches bevorzugt beim Fokussieren gleichsinnig mit der Vordergruppe und der Mittelgruppe versetzt wird, wobei jedoch der Hub der Hintergruppe kleiner ist als der Hub der Vordergruppe und der Mittelgruppe. Die letztere Bedingung bedeutet somit, dass der Verstellweg der Hintergruppe beim Fokussieren kleiner ist als der Verstellweg des Gesamtobjektivs. Hierdurch kann eine besonders gute Abbildungsleistung im Nahbereich erzielt werden, da die Bildfehler Koma und astigmatische Differenz ausgeglichen werden können.

Die Vordergruppe umfasst in einer Reihenfolge von einem objektseitigen zu einem bildseitigen Ende zumindest eine erste Linse mit positiver Brechkraft, eine zweite Linse mit negativer Brechkraft, eine dritte Linse mit negativer Brechkraft und eine vierte Linse mit positiver Brechkraft, wobei die Linsen mit positiver Brechkraft bi-konvex und die Linsen mit negativer Brechkraft bi-konkav sind.

Die Linsen der Vordergruppe weisen eine Abbe-Zahl zwischen 38 und 45 auf, wobei die Linsen der Vordergruppe, welche eine negative Brechkraft aufweisen, eine Abweichung der relativen Teildispersion $\Delta P_{g,F}$ von der Normalgeraden kleiner oder gleich -0,0035 aufweisen. Die Abweichung der relativen Teildispersion $\Delta P_{g,F}$ von der Normalgeraden ist somit negativ. Durch diese Ausgestaltung können unerwünschte Beiträge zum Farbfehler des sekundären Spektrums minimiert werden.

Die erste Linse weist einen Brechungsindex zwischen 1,80 und 1,86 auf und die vierte Linse weist einen Brechungsindex größer oder gleich 1,86 auf.

Vorteilhafterweise bilden die erste und die zweite Linse eine erste Untergruppe, welche als Kittglied ausgebildet ist und/oder eine Gesamtbrechkraft aufweist, welche nicht mehr als 10%, bevorzugt nicht mehr als 7,5%, der Gesamtbrechkraft der Vordergruppe beträgt. Insbesondere beträgt der Quotient aus der Brennweite der ersten Untergruppe und der Gesamtbrennweite des Objektivs zwischen 43,49 und 53,13. Bevorzugt bilden die dritte und die vierte Linse eine zweite Untergruppe, welche als Kittglied ausgebildet ist.

Vorteilhafterweise weisen die verschiedenen Linsenflächen der Vordergruppe jeweilige Krümmungsradien auf, wobei rn den Radius einer Fläche n im Scheitelpunkt beschreibt. Es beschreibt:

- r1 die Krümmung der objektseitigen Fläche der ersten Linse L1,
- r2 die Krümmung der Kontaktfläche zwischen der ersten Linse L1 und der zweiten Linse L2,
- r3 die Krümmung der bildseitigen Fläche der zweiten Linse L2,
- r4 die Krümmung der objektseitigen Fläche der dritten Linse L3,
- r5 die Krümmung der Kontaktfläche zwischen der dritten Linse L3 und der vierten Linse L4, und
- r6 die Krümmung der bildseitigen Fläche der vierten Linse L4.

Für ein jeweiliges Verhältnis zweier Radien $r_n/r_m$ gelten bevorzugt eine oder mehrere der folgenden Beziehungen:

$$-1{,}58 < r1/r6 < -1{,}29,$$

$$-1{,}07 < r2/r5 < -0{,}88,$$

$$-1{,}04 < r3/r4 < -0{,}85.$$

Die vorstehend genannten Merkmale der Linsen der Vordergruppe tragen dazu bei, die astigmatische Differenz zu korrigieren, die Petzval-Summe, welche ein Maß für die Bildfeldwölbung des Objektivs darstellt, zu minimieren und die Farbfehler zu reduzieren.

Vorteilhafterweise weist die Vordergruppe, bevorzugt die erste Linse, wenigstens eine asphärische Fläche auf, wobei insbesondere zumindest die objektseitige Fläche der ersten Linse asphärisch ist. Durch diese Merkmale sowie durch die vorstehend beschriebenen Merkmale der ersten Untergruppe können unerwünschte Beiträge zur Verzeichnung minimiert werden. Zudem eignet sich die erste Untergruppe als ein Justierglied oder Schiebeglied, um bei der Montage des Objektivs Zentrierfehler in der Bildmitte zu minimieren.

Allgemein tragen die vorstehend genannten vorteilhaften Ausgestaltungen der Linsen der Vordergruppe dazu bei, den Farbquerfehler und die Verzeichnung zu minimieren und das Bildfeld zu ebnen.

Gemäß einer weiteren vorteilhaften Ausführungsform der Erfindung umfasst die Mittelgruppe in einer Reihenfolge von einem objektseitigen zu einem bildseitigen Ende zumindest eine fünfte Linse mit positiver Brechkraft, eine sechste Linse mit negativer Brechkraft und eine siebte Linse mit positiver Brechkraft, welche bevorzugt zu einem Kittglied zusammengefasst sind, wobei bevorzugt die Linsen mit positiver Brechkraft bi-konvex und die Linse mit negativer Brechkraft bi-konkav sind, und/oder wobei bevorzugt die Brechungsindices der Linsen mit positiver Brechkraft kleiner sind als die Brechungsindices der Linsen mit negativer Brechkraft.

Vorteilhafterweise weisen die verschiedenen Linsenflächen der Mittelgruppe jeweilige Krümmungsradien auf, wobei rn den Radius einer Fläche n im Scheitelpunkt beschreibt. Es beschreibt:

- r8 die Krümmung der objektseitigen Fläche der fünften Linse L5,
- r9 die Krümmung der Kontaktfläche zwischen der fünften Linse L5 und der sechsten Linse L6,
- r10 die Krümmung der Kontaktfläche zwischen der sechsten Linse L6 und der siebten Linse L7, und
- r11 die Krümmung der bildseitigen Fläche der siebten Linse L7.

Für ein jeweiliges Verhältnis zweier Radien $r_n/r_m$ gelten bevorzugt eine oder mehrere der folgenden Beziehungen:

$$-7{,}11 < r8/r11 < -5{,}82,$$

$$-1{,}51 < r9/r10 < -1{,}24.$$

Diese Ausgestaltung trägt zu einer Korrektur des Astigmatismus bei gleichzeitiger Minimierung der sphärischen Aberration im Sagittalschnitt bei. Des Weiteren eignet sich eine derart ausgestaltete Mittelgruppe als Justierglied oder Schiebeglied, um bei der Montage Zentrierfehler im Bildfeld zu minimieren.

Vorteilhafterweise weisen die Linsen der Mittelgruppe mit positiver Brechkraft eine Abbe-Zahl größer oder gleich 65 und/oder eine Abweichung der relativen Teildispersion $\Delta P_{g,F}$ von der Normalgeraden größer oder gleich +0,0130 auf.

Vorteilhafterweise weisen die Linsen der Mittelgruppe mit negativer Brechkraft eine Abbe-Zahl zwischen 38 und 45 und/oder eine Abweichung der relativen Teildispersion $\Delta P_{g,F}$ von der Normalgeraden kleiner oder gleich -0,0035 auf.

Die vorstehend genannten Merkmale der Linsen der Mittelgruppe tragen dazu bei, die Farbfehler des primären und sekundären Spektrums in der Bildmitte zu korrigieren.

Gemäß einer weiteren vorteilhaften Ausführungsform der Erfindung umfasst die Hintergruppe in einer Reihenfolge von einem objektseitigen zu einem bildseitigen Ende zumindest eine achte Linse mit positiver Brechkraft, eine neunte Linse mit negativer Brechkraft und eine zehnte Linse mit negativer Brechkraft auf, wobei bevorzugt die achte und die neunte Linse zu einem Kittglied zusammengefasst sind, und/oder wobei bevorzugt die achte Linse bi-konvex und/oder die neunte Linse bi-konkav und/oder die zehnte Linse meniskusförmig ist, wobei bevorzugt die Flächen hohl zur Objektseite angeordnet sind.

Vorteilhafterweise weist die achte Linse eine Abbe-Zahl zwischen 38 und 45 und/oder eine Brechzahl zwischen 1,80 und 1,86 auf.

Vorteilhafterweise weist die neunte Linse eine Abbe-Zahl zwischen 38 und 45 und/oder eine Abweichung der relativen Teildispersion $\Delta P_{g,F}$ von der Normalgeraden kleiner oder gleich -0,0035 auf.

Die vorstehend genannten, die Linsen der Hintergruppe betreffenden Merkmale tragen dazu bei, die Petzval-Summe sowie unerwünschte Beiträge zum Farbfehler des primären und sekundären Spektrums zu minimieren.

Vorteilhafterweise sind die objektseitige Fläche der achten Linse und/oder beide Flächen der zehnten Linse asphärisch. Die asphärische Ausgestaltung der genannten Flächen trägt dazu bei, die astigmatische Differenz und die Koma über das Bildfeld auszubalancieren sowie unerwünschte Beiträge zur sphärischen Aberration zu minimieren.

Vorteilhafterweise weisen die verschiedenen Linsenflächen der Hintergruppe jeweilige Krümmungsradien auf, wobei rn den Radius einer Fläche n im Scheitelpunkt beschreibt. Es beschreibt:

- r12 die Krümmung der objektseitigen Fläche der achten Linse L8,
- r13 die Krümmung der Kontaktfläche zwischen der achten Linse L8 und der neunten Linse L9,
- r14 die Krümmung der bildseitigen Fläche der neunten Linse L9,
- r15 die Krümmung der objektseitigen Fläche der zehnten Linse L10, und
- r16 die Krümmung der bildseitigen Fläche der zehnten Linse L10.

Mit s, als der paraxialen Objektschnittweite an der Fläche n ist eine Größe $\Delta r_n$ definiert durch $(s_n-r_n)/r_n$.

Für eine jeweilige Beziehung zweier Radien $r_n/r_m$ bzw. die Größe $\Delta r_n$ gelten bevorzugt eine oder mehrere der folgenden Beziehungen:

$$+0{,}5 < \Delta r12 < +0{,}9,$$

$$-2{,}5 < \Delta r13 < -2{,}1,$$

$$-0{,}2 < \Delta r14 < +0{,}2,$$

$$-1{,}3 < \Delta r15 < +1{,}0,$$

$$-1{,}3 < \Delta r16 < +1{,}0,$$

$$r16 < r15.$$

Weiterhin tragen die vorstehend genannten vorteilhaften Ausgestaltungen der Linsen der Hintergruppe dazu bei, die Einzelelemente unempfindlich, aber mit entgegengesetzter Wirkung, gegenüber einer Dezentrierung bei der Montage zu machen, so dass daraus resultierend die gesamte Hintergruppe ebenfalls unempfindlich gegenüber einer Dezentrierung wird.

Gemäß einer weiteren vorteilhaften Ausführungsform ist für eine Mehrzahl der Linsen mit negativer Brechkraft der Quotient aus dem Durchmesser der Linse und der Mittendicke größer oder gleich 18.

Vorteilhafterweise umfasst die Mehrzahl der Linsen mit negativer Brechkraft alle Linsen mit negativer Brechkraft mit Ausnahme der dritten Linse. Die dritte Linse kann von der vorstehenden Bedingung ausgenommen sein, um einen besseren Ausgleich zwischen Koma und Astigmatismus zu erzielen.

Vorteilhafterweise ist für jede bi-konvexe Linse mit mindestens einer asphärischen Fläche der Quotient aus der Mittendicke und der Randdicke größer oder gleich 5,8.

Die vorstehend genannten Bemessungen der Quotienten aus Linsendurchmesser und Mittendicke bzw. Mittendicke und Randdicke tragen zu einer kompakten Bauweise des Gesamtobjektivs bei, so dass das Verhältnis zwischen der optischen Baulänge SO' und der halben Bilddiagonale YB kleiner oder gleich 3,1 und das Verhältnis zwischen der optischen Baulänge SO' und der Gesamtbrennweite f'$_{ges}$ des Objektivs kleiner oder gleich 1,9 ist.

Gemäß einer weiteren vorteilhaften Ausführungsform umfasst die Vordergruppe eine erste Untergruppe mit positiver Brechkraft und eine zweite Untergruppe mit positiver Brechkraft, die Mittelgruppe eine dritte Untergruppe mit positiver Brechkraft und die Hintergruppe eine vierte Untergruppe mit positiver Brechkraft und eine fünfte Untergruppe mit negativer Brechkraft, wobei jede Untergruppe jeweils aus mehreren, zu einem Kittglied zusammengefassten Linsen oder aus einer Einzellinse gebildet ist.

Gemäß einer weiteren vorteilhaften Ausführungsform ist zwischen der Vordergruppe und der Mittelgruppe eine Aperturblende angeordnet.

Gemäß einer weiteren vorteilhaften Ausführungsform beträgt das Öffnungsverhältnis 1:2,0. Der Bildwinkel beträgt etwa 62,2°.

Vorteilhafterweise weist die erste Linse eine Knoop-Härte HK von wenigstens 600 N/mm$^2$ und/oder eine Säure-Resistenz gemäß ISO 8424 besser als 4.0 (Säure-Resistenzklasse 4, keine sichtbaren Oberflächenveränderungen) auf. Dadurch ist eine ausreichende Resistenz der Frontlinse gegenüber mechanischen Beanspruchungen und Umwelteinflüssen gegeben. Diese Merkmale werden beispielsweise von dem Glasmaterial S-LAH89 des Produzenten Ohara erfüllt.

Ein Weitwinkelobjektiv gemäß einer oder mehrerer der vorstehend genannten Ausführungsformen zeichnet sich aus durch

- kompakte Abmessungen,
- eine sehr hohe Kontrast- und Detailwiedergabe über das gesamte Bildfeld,
- eine nicht wahrnehmbare Verzeichnung,
- eine sehr gute Ebnung des Bildfeldes bei gleichzeitig sehr guter Korrektur des Farblängs- und Farbquerfehlers über das primäre und sekundäre Spektrum,
- eine gleichmäßig gute Kontrastwiedergabe und Korrektur der Bildfehler bis in einen Naheinstellbereich von 0,3 m, und
- eine einfache Montage der optischen Gruppen.

Weitere vorteilhafte Ausführungsformen der Erfindung ergeben sich aus den Unteransprüchen, der Beschreibung und der Zeichnung, wobei einzelne Merkmale und/oder Merkmalsgruppen in geeigneter Weise - auch abweichend von den hier explizit erwähnten Merkmalskombinationen - miteinander kombiniert werden können.

Die Erfindung wird nachfolgend anhand eines Ausführungsbeispiels mit Bezug auf die Zeichnungen beschrieben. Es zeigen:

Fig. 1    einen Linsenschnitt eines Weitwinkelobjektivs gemäß einem Ausführungsbeispiel der Erfindung in der Entfernungseinstellung Unendlich;

Fig. 2    einen Linsenschnitt des Weitwinkelobjektivs gemäß Fig. 1 in der Entfernungseinstellung Nah; und

Fig. 3    ein Diagramm einer Modulationsübertragungsfunktion des Weitwinkelobjektivs gemäß Fig. 1 und 2.

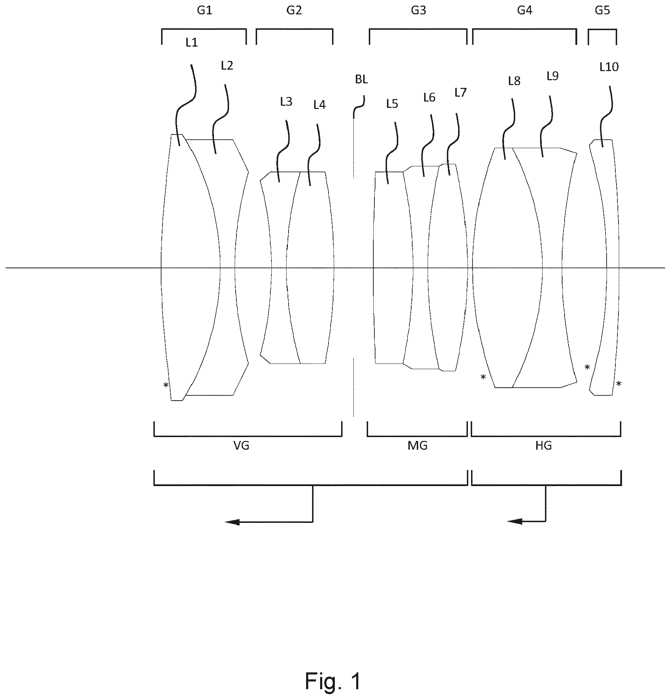

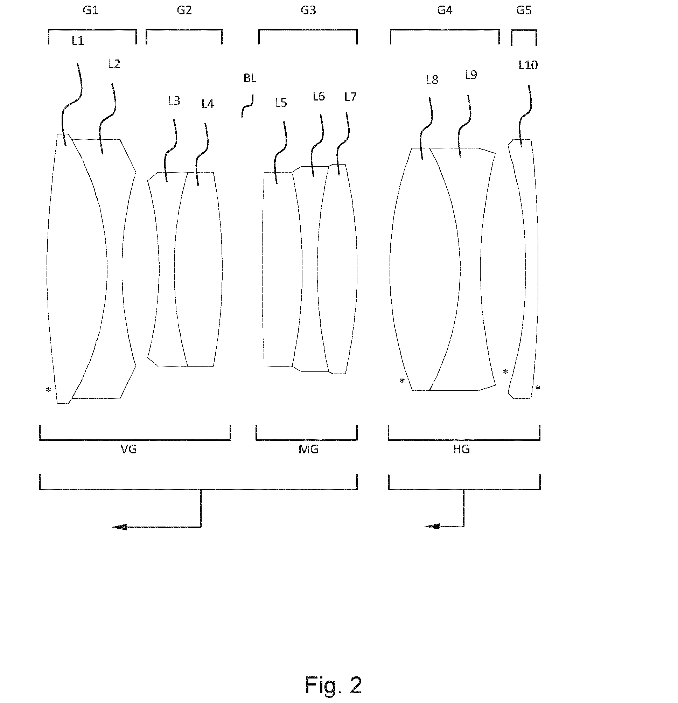

Fig. 1 und 2 zeigen ein fotografisches Weitwinkelobjektiv gemäß einem Ausführungsbeispiel mit zehn refraktiven Linsen L1 bis L10.

Die Linsen L1 bis L10 sind in aufsteigender Reihenfolge in einer Lichtausbreitungsrichtung des Strahlengangs beginnend von der Objektseite zur Bildseite nummeriert. Relative Positionsangaben wie "vor" oder "hinter" beziehen sich auf diese Reihenfolge.

Das Weitwinkelobjektiv umfasst eine Vordergruppe VG, welche die erste bis vierte Linse L1 bis L4 umfasst, eine Mittelgruppe MG, welche die fünfte bis siebte Linse L5 bis L7 umfasst, und eine Hintergruppe HG, welche die achte bis zehnte Linse umfasst.

Die erste Linse L1 mit positiver Brechkraft und die zweite Linse L2 mit negativer Brechkraft sind zu einem Kittglied verbunden und bilden eine erste Untergruppe G1. Die dritte Linse L3 mit negativer Brechkraft und die vierte Linse L4 mit positiver Brechkraft sind ebenfalls zu einem Kittglied verbunden und bilden eine zweite Untergruppe G2. Die Vordergruppe VG umfasst somit die erste und zweite Untergruppe G1, G2.

Die fünfte Linse L5 mit positiver Brechkraft, die sechste Linse L6 mit negativer Brechkraft und die siebte Linse L7 mit positiver Brechkraft sind zu einem weiteren Kittglied verbunden und bilden eine dritte Untergruppe G3. Die Mittelgruppe MG umfasst die dritte Untergruppe G3.

Die achte Linse L8 mit positiver Brechkraft und die neunte Linse L9 mit negativer Brechkraft sind zu einem weiteren Kittglied verbunden und bilden eine vierte Untergruppe G4. Die zehnte Linse L10 mit negativer Brechkraft ist als Einzellinse ausgebildet und bildet eine fünfte Untergruppe G5. Die Hintergruppe HG umfasst die vierte und die fünfte Untergruppe G4, G5.

Zwischen der Vordergruppe VG und der Mittelgruppe MG ist eine Aperturblende BL angeordnet.

Die Hintergruppe HG ist als Floatingelement ausgebildet und bewegt sich beim Fokussieren gleichsinnig mit dem aus der Vordergruppe VG, der Aperturblende BL und der Mittelgruppe MG gebildeten Restobjektiv, wobei jedoch der Hub und damit der Verstellweg des Floatingelements oder der Hintergruppe HG kleiner ist als der Hub oder Verstellweg des Restobjektivs.

In den folgenden Tabellen sind detaillierte Konstruktionsdaten und optische Daten für die Linsenelemente des Weitwinkelobjektivs angegeben. Die Daten beziehen sich auf die Flächen, die jeweilige Luft-Glas- bzw. Glas-Glas-Übergänge bezeichnen und von dem objektseitigen Ende zu dem bildseitigen Ende in aufsteigender Reihe nummeriert sind. Somit bezeichnet Fläche 1 die objektseitige Fläche der ersten Linse L1, Fläche 2 die gemeinsame Fläche von erster und zweiter Linse L1, L2 und so weiter. Die letzte Fläche 16 ist die bildseitige Fläche der zehnten Linse L10. Fläche 7 entspricht der Aperturblende BL.

Die Konstruktionsdaten sind auf eine Gesamtbrennweite des Weitwinkelobjektivs von f = 1 mm normiert.

Für eine jeweilige Fläche bezeichnet r den Scheitelradius, $d_M$ die Mittendicke oder den Abstand zu einer benachbarten Fläche im Scheitelpunkt, $n_e$ den Brechungsindex für die Fraunhofer-Linie e (Wellenlänge 546,07 nm) und $v_e$ die Abbe-Zahl für die Fraunhofer-Linie e. Weiterhin bezeichnet $D/d_M$ das Verhältnis zwischen Durchmesser D und Mittendicke $d_M$, $d_M/dr$ das Verhältnis zwischen Mittendicke $d_M$ und Randdicke $dr$, s die paraxiale Objektschnittweite, s'die paraxiale Bildschnittweite und a die aplanatische Objektschnittweite.

Die Zugehörigkeiten der jeweiligen Flächen zu den jeweiligen Linsen L1 - L10, den Untergruppen G1 -G5 und den Gruppen HG, MG und HG ist ebenfalls dargestellt.

| Fläche | r [mm] | $d_M$ [mm] | $n_e$ | $V_e$ | $\triangle P_{gF}$ | Linse | Untergruppe | Gruppe |
|---|---|---|---|---|---|---|---|---|
| 1 | 1,546 | 0,17 | 1,855 | 40 | | L1 | G1 | VG |
| 2 | -0,628 | 0,03 | 1,658 | 39 | -0,004 | L2 | | |
| 3 | 0,742 | 0,10 | 1,000 | | | | | |
| 4 | -0,790 | 0,06 | 1,658 | 39 | -0,004 | L3 | G2 | |
| 5 | 0,648 | 0,13 | 1,888 | 41 | | L4 | | |
| 6 | -1,081 | 0,04 | 1,000 | | | | | |
| 7 | Blende | 0,04 | 1,000 | | | | | |
| 8 | 5,209 | 0,19 | 1,498 | 81 | +0,031 | L5 | G3 | MG |
| 9 | -0,876 | 0,03 | 1,658 | 39 | -0,004 | L6 | | |
| 10 | 0,641 | 0,15 | 1,498 | 81 | +0,031 | L7 | | |
| 11 | -0,809 | 0,01 | 1,000 | | | | | |
| 12 | 0,802 | 0,22 | 1,855 | 40 | | L8 | G4 | HG |
| 13 | -0,616 | 0,03 | 1,658 | 39 | -0,004 | L9 | | |
| 14 | 0,653 | 0,19 | 1,000 | | | | | |
| 15 | -1,490 | 0,03 | 1,583 | 59 | | L10 | G5 | |
| 16 | -6,742 | 0,36 | 1,000 | | | | | |

| Fläche | $D/d_M$ | $d_M/dr$ | (s-a)/a [mm] |
|---|---|---|---|
| 1 | | 9,1 | |
| 2 | 23,9 | | |
| 3 | | | |
| 4 | | | |
| 5 | | | |
| 6 | 12,9 | | |
| 7 | | | |
| 8 | | | |
| 9 | 18,0 | | |
| 10 | | | |
| 11 | 96,4 | | |
| 12 | | 6,2 | -0,41 |
| 13 | 23,9 | | -1,69 |

(fortgesetzt)

| Fläche | D/d$_M$ | d$_M$/dr | (s-a)/a [mm] |
|---|---|---|---|
| 14 | | | -0,42 |
| 15 | 20,0 | | -1,10 |
| 16 | | | -1,06 |

Die objektseitigen Flächen der ersten und der achten Linse L1, L8 (Flächen 1 und 12) sowie beide Flächen der zehnten Linse L10 (Flächen 15 und 16) weisen eine asphärische Krümmung auf und sind in Fig. 1 und 2 mit dem Zeichen * gekennzeichnet. Für eine Pfeilhöhe z einer jeweiligen Linsenfläche parallel zur optischen Achse in einem Punkt mit der Höhe h bezogen auf die optische Achse und senkrecht zu dieser gilt die folgende Asphärengleichung:

$$z(h) = \frac{h^2/r0}{1 + \sqrt{1 - (1+k)\,(h/r0)^2}} + a2 \cdot h^4 + a3 \cdot h^6 + \cdots + a6 \cdot h^{12}$$

wobei $r0$ der Scheitelkrümmungsradius, $k$ die konische Konstante und a2, a3, ..., a6 die Asphärenkoeffizienten sind.
Für die vier asphärischen Flächen 1, 12, 15 und 16 sind die Koeffizienten $k$, $a2$ $bis$ a6 in der folgenden Tabelle angegeben (in Exponentialdarstellung):

| Fläche | k | a2 | a3 | a4 | a5 | a6 |
|---|---|---|---|---|---|---|
| 1 | 0 | 0.1569D-4 | -0.182035D+1 | 0.2404D-10 | | |
| 12 | 0 | 0.1111D-5 | -0.524051D+0 | 0.4762D-10 | | |
| 15 | 0 | 0.9390D-4 | 0.357335D+2 | 0.9081D-09 | 0.169936D+2 | 0.7799D-15 |
| 16 | 0 | 0.6674D-4 | 0.366574D+2 | 0.1080D-08 | | |

Weitere optische Daten für das Gesamtobjektiv, die Untergruppen G1 bis G5 sowie die Vorder-, Mittel- und Hintergruppe VG, MG, HG sind in der nachfolgenden Tabelle angegeben. Die Tabelle umfasst das Vorzeichen der Brechkraft, die jeweilige Brennweite f' der Untergruppen und Gruppen. Ferner ist das Verhältnis der jeweiligen Brennweiten f' zur Gesamtbrennweite $f'_{ges}$ des Objektivs angegeben.

| Untergruppe | Brechkraft | f' [mm] | f'/f'ges |
|---|---|---|---|
| Objektiv | + | 1,00 | 1,00 |
| G1 | + | 48,07 | 48,07 |
| G2 | + | 2,47 | 2,47 |
| G3 | + | 3,34 | 3,34 |
| G4 | + | 2,04 | 2,04 |
| G5 | - | -3,29 | -3,29 |
| VG | + | 2,52 | 2,52 |
| MG | + | 3,34 | 3,34 |
| HG | + | 3,87 | 3,87 |

Die Lichtstärke oder das Öffnungsverhältnis des Weitwinkelobjektivs beträgt 1:2,0. Der gesamte diagonale Bildwinkel beträgt 62,2°. Das Verhältnis der optischen Baulänge SO' zur Gesamtbrennweite $f'_{ges}$ beträgt 1,85 und das Verhältnis zwischen optischer Baulänge $SO'$ und der halben Bilddiagonalen beträgt 3,08. Das Verhältnis zwischen der Bildschnittweite $S'O'$ und der Gesamtbrennweite $f'_{ges}$ beträgt 0,43.
In der nachfolgenden Tabelle sind verschiedene Radienverhältnisse für Flächen der Vordergruppe VG und der Mittelgruppe MG angegeben. Ein Wert rn bezeichnet jeweils den Krümmungsradius im Scheitelpunkt der Fläche $n$.

| Gruppe | Radienverhältnis | |
|--------|--------|--------|
| VG | r1 /r6 | -1,43 |
| | r2/r5 | -0,97 |
| | r3/r4 | -0,94 |
| MG | r8/r11 | -6,44 |
| | r9/r10 | -1,37 |

Die vorstehend beschriebenen Konstruktionsdaten und optischen Werte der Ausgestaltung eines erfindungsgemäßen Weitwinkelobjektivs sind nur beispielhaft. Es versteht sich, dass auch Weitwinkelobjektive mit abweichenden Konstruktionsdaten und optischen Parametern von der vorliegenden Erfindung umfasst sein können.

Insbesondere können zusätzlich zu den beispielhaft genannten zehn Linsen auch weitere Linsen vorgesehen sein. So können beispielsweise die Vordergruppe VG, die Mittelgruppe MG und/oder die Hintergruppe HG jeweils eine weitere Linse mit positiver oder negativer Brechkraft an einer geeigneten Stelle aufweisen. Es versteht sich, dass bei einer derartigen Abwandlung sich gegebenenfalls die Nummerierung der Linsen entsprechend verschiebt.

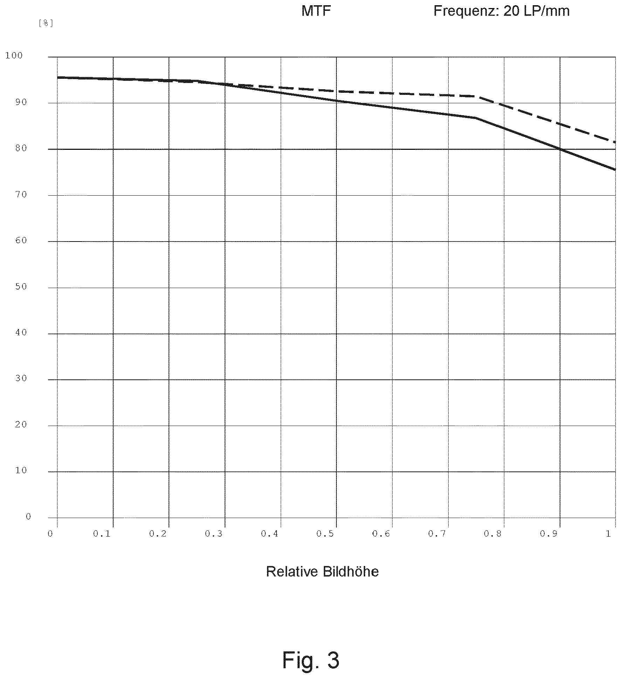

In Fig. 3 ist die Modulationsübertragungsfunktion MTF für ein Testobjekt mit 20 Linienpaaren/mm dargestellt. In dem Diagramm ist der Kontrast bzw. die Modulation in Prozent über die relative Bildhöhe aufgetragen. Die durchgezogene Linie repräsentiert die MTF für sagittale Strukturen, während die gestrichelte Linie die MFT für tangentiale Strukturen repräsentiert. Das Weitwinkelobjektiv wurde auf eine Objektentfernung von unendlich eingestellt. Aus dem Diagramm ist ersichtlich, dass der Kontrast auch an den Bildrändern nicht unter etwa 75% abfällt.

## Bezugszeichenliste

BL          Aperturblende
L1 - L10    erste bis zehnte Linse
G1 - G5     erste bis fünfte Untergruppe
VG          Vordergruppe
MG          Mittelgruppe
HG          Hintergruppe

## Patentansprüche

1.  Fotografisches Weitwinkelobjektiv, umfassend in einer Reihenfolge von einem objektseitigen zu einem bildseitigen Ende eine Vordergruppe (VG) positiver Gesamtbrechkraft mit wenigstens vier Linsen (L1 - L4), eine Mittelgruppe (MG) positiver Gesamtbrechkraft mit wenigstens drei Linsen (L5 - L7) und eine Hintergruppe (HG) positiver Gesamtbrechkraft mit wenigstens drei Linsen (L8 - L10), wobei der Quotient aus der Brennweite der Vordergruppe (VG) und der Gesamtbrennweite des Objektivs zwischen 2,28 und 2,79 beträgt, der Quotient aus der Brennweite der Mittelgruppe (MG) und der Gesamtbrennweite des Objektivs zwischen 3,02 und 3,69 beträgt, und der Quotient aus der Brennweite der Hintergruppe (HG) und der Gesamtbrennweite des Objektivs zwischen 3,50 und 4,29 beträgt,

    wobei die Vordergruppe (VG) in einer Reihenfolge von einem objektseitigen zu einem bildseitigen Ende zumindest eine erste Linse (L1) mit positiver Brechkraft, eine zweite Linse (L2) mit negativer Brechkraft, eine dritte Linse (L3) mit negativer Brechkraft und eine vierte Linse (L4) mit positiver Brechkraft umfasst, wobei die Linsen mit positiver Brechkraft (L1, L4) bi-konvex und die Linsen mit negativer Brechkraft (L2, L3) bi-konkav sind, wobei die Linsen (L1 - L4) der Vordergruppe (VG) eine Abbe-Zahl zwischen 38 und 45 aufweisen, wobei die Linsen (L2, L3) der Vordergruppe (VG), welche eine negative Brechkraft aufweisen, eine Abweichung der relativen Teildispersion $\Delta P_{g,F}$ von der Normalgeraden kleiner oder gleich -0,0035 aufweisen, und wobei die erste Linse (L1) einen Brechungsindex zwischen 1,80 und 1,86 und die vierte Linse (L4) einen Brechungsindex größer oder gleich 1,86 aufweist.

2.  Weitwinkelobjektiv nach Anspruch 1, wobei die Vordergruppe (VG), die Mittelgruppe (MG) und die Hintergruppe (HG) jeweils wenigstens eine Linse mit negativer Brechkraft (L2, L3, L6, L9, L10) und wenigstens eine Linse mit positiver Brechkraft (L1, L4, L5, L7, L8) umfassen.

3. Weitwinkelobjektiv nach Anspruch 2, wobei eine Mehrzahl der Linsen mit negativer Brechkraft (L2, L3, L6, L9, L10) einen Brechungsindex kleiner oder gleich 1,70, eine Abbe-Zahl zwischen 38 und 45 und/oder eine Abweichung der relativen Teildispersion $\Delta P_{g,F}$ von der Normalgeraden kleiner oder gleich -0,0035 aufweist, wobei bevorzugt die Mehrzahl der Linsen mit negativer Brechkraft (L2, L3, L6, L9, L10) alle Linsen mit negativer Brechkraft (L2, L3, L6, L9) mit Ausnahme einer am bildseitigen Ende der Hintergruppe (HG) angeordneten Linse mit negativer Brechkraft (L10) umfasst.

4. Weitwinkelobjektiv nach einem der vorstehenden Ansprüche, wobei die Hintergruppe (HG) als Floatingelement ausgebildet ist, welches bevorzugt beim Fokussieren gleichsinnig mit der Vordergruppe (VG) und der Mittelgruppe (MG) versetzt wird, wobei jedoch der Hub der Hintergruppe (HG) kleiner ist als der Hub der Vordergruppe (VG) und der Mittelgruppe (MG).

5. Weitwinkelobjektiv nach einem der vorstehenden Ansprüche, wobei die erste und die zweite Linse (L1, L2) eine erste Untergruppe (G1) bilden, welche als Kittglied ausgebildet ist und/oder eine Gesamtbrechkraft aufweist, welche nicht mehr als 10%, bevorzugt nicht mehr als 7,5%, der Gesamtbrechkraft der Vordergruppe (VG) beträgt, und/oder dass die dritte und die vierte Linse (L3, L4) eine zweite Untergruppe (G2) bilden, welche als Kittglied ausgebildet ist.

6. Weitwinkelobjektiv nach einem der vorstehenden Ansprüche, wobei die Vordergruppe (VG), bevorzugt die erste Linse (L1), wenigstens eine asphärische Fläche aufweist, wobei insbesondere zumindest die objektseitige Fläche der ersten Linse (L1) asphärisch ist.

7. Weitwinkelobjektiv nach einem der vorstehenden Ansprüche, wobei die Mittelgruppe (MG) in einer Reihenfolge von einem objektseitigen zu einem bildseitigen Ende zumindest eine fünfte Linse (L5) mit positiver Brechkraft, eine sechste Linse (L6) mit negativer Brechkraft und eine siebte Linse (L7) mit positiver Brechkraft umfasst, welche bevorzugt zu einem Kittglied zusammengefasst sind, wobei bevorzugt die Linsen mit positiver Brechkraft (L5, L7) bi-konvex und die Linsen mit negativer Brechkraft (L6) bi-konkav sind.

8. Weitwinkelobjektiv nach Anspruch 7, wobei die Linsen (L5, L7) der Mittelgruppe (MG) mit positiver Brechkraft eine Abbe-Zahl größer oder gleich 65 und/oder eine Abweichung der relativen Teildispersion $\Delta P_{g,F}$ von der Normalgeraden größer oder gleich +0,0130 aufweisen, und/oder dass die Linsen (L6) der Mittelgruppe (MG) mit negativer Brechkraft eine Abbe-Zahl zwischen 38 und 45 und/oder eine Abweichung der relativen Teildispersion $\Delta P_{g,F}$ von der Normalgeraden kleiner oder gleich -0,0035 aufweisen.

9. Weitwinkelobjektiv nach einem der vorstehenden Ansprüche, wobei die Hintergruppe (HG) in einer Reihenfolge von einem objektseitigen zu einem bildseitigen Ende zumindest eine achte Linse (L8) mit positiver Brechkraft, eine neunte Linse (L9) mit negativer Brechkraft und eine zehnte Linse (L10) mit negativer Brechkraft umfasst, wobei bevorzugt die achte und die neunte Linse (L8, L9) zu einem Kittglied zusammengefasst sind, und/oder wobei bevorzugt die achte Linse (L8) bi-konvex und/oder die neunte Linse (L9) bi-konkav und/oder die zehnte Linse (L10) meniskusförmig ist.

10. Weitwinkelobjektiv nach Anspruch 9, wobei die achte Linse (L8) eine Abbe-Zahl zwischen 38 und 45 und/oder eine Brechzahl größer oder gleich 1,80 und kleiner oder gleich 1,86 aufweist., und/oder dass die neunte Linse (L9) eine Abbe-Zahl zwischen 38 und 45 und/oder eine Abweichung der relativen Teildispersion $\Delta P_{g,F}$ von der Normalgeraden kleiner oder gleich -0,0035 aufweist.

11. Weitwinkelobjektiv nach Anspruch 9 oder 10, wobei die objektseitige Fläche der achten Linse (L8) und/oder beide Flächen der zehnten Linse (L10) asphärisch sind.

12. Weitwinkelobjektiv nach einem der vorstehenden Ansprüche, wobei für eine Mehrzahl der Linsen mit negativer Brechkraft (L2, L3, L6, L9, L10) der Quotient aus dem Durchmesser der Linse und der Mittendicke größer oder gleich 18 ist, wobei bevorzugt die Mehrzahl der Linsen mit negativer Brechkraft (L2, L6, L9, L10) alle Linsen mit negativer Brechkraft (L2, L6, L9, L10) mit Ausnahme der dritten Linse (L3) umfasst.

13. Weitwinkelobjektiv nach einem der vorstehenden Ansprüche, wobei für jede bi-konvexe Linse mit mindestens einer asphärischen Fläche (L1, L8) der Quotient aus der Mittendicke und der Randdicke größer oder gleich 5,8 ist.

14. Weitwinkelobjektiv nach einem der vorstehenden Ansprüche, wobei die Vordergruppe (VG) eine erste Untergruppe (G1) mit positiver Brechkraft und eine zweite Untergruppe (G2) mit positiver Brechkraft, die Mittelgruppe (MG) eine dritte Untergruppe (G3) mit positiver Brechkraft und die Hintergruppe (HG) eine vierte Untergruppe (G4) mit positiver Brechkraft und eine fünfte Untergruppe (G5) mit negativer Brechkraft umfasst, wobei jede Untergruppe (G1 - G5) jeweils aus mehreren, zu einem Kittglied zusammengefassten Linsen oder aus einer Einzellinse gebildet ist.

15. Weitwinkelobjektiv nach einem der vorstehenden Ansprüche, wobei zwischen der Vordergruppe (VG) und der Mittelgruppe (MG) eine Aperturblende (BL) angeordnet ist, und/oder dass der Bildwinkel 62,2° und das Öffnungsverhältnis 1:2,0 beträgt.

**Claims**

1. A wide-angle photographic objective comprising, in sequence from an object-side end to an image-side end, a front group (VG) of total positive refractive power having at least four lenses (L1 - L4); a middle group (MG) of total positive refractive power having at least three lenses (L5 - L7); and a rear group (HG) of total positive refractive power having at least three lenses (L8 - L10), wherein the quotient of the focal length of the front group (VG) and the total focal length of the objective amounts to between 2.28 and 2.79, the quotient of the focal length of the middle group (MG) and the total focal length of the objective amounts to between 3.02 and 3.69, and the quotient of the focal length of the rear group (HG) and the total focal length of the objective amounts to between 3.50 and 4.29,

   wherein the front group (VG) comprises, in sequence from an object-side end to an image-side end, at least a first lens (L1) having a positive refractive power, a second lens (L2) having a negative refractive power, a third lens (L3) having a negative refractive power, and a fourth lens (L4) having a positive refractive power, with the lenses having a positive refractive power (L1, L4) being bi-convex and the lenses having a negative refractive power (L2, L3) being bi-concave,
   wherein the lenses (L1 - L4) of the front group (VG) have an Abbe number of between 38 and 45, with the lenses (L2, L3) of the front group (VG), which have a negative refractive power, having a deviation of the relative partial dispersion $\Delta P_{g,F}$ from the normal line of less than or equal to -0.0035, and
   wherein the first lens (L1) has a refractive index of between 1.80 and 1.86 and the fourth lens (L4) has a refractive index of greater than or equal to 1.86.

2. A wide-angle objective in accordance with claim 1,
   wherein the front group (VG), the middle group (MG), and the rear group (HG) each comprise at least one lens having a negative refractive power (L2, L3, L6, L9, L10) and at least one lens having a positive refractive power (L1, L4, L5, L7, L8).

3. A wide-angle objective in accordance with claim 2,
   wherein a majority of the lenses having a negative refractive power (L2, L3, L6, L9, L10) have a refractive index of less than or equal to 1.70, an Abbe number of between 38 and 45, and/or a deviation of the relative partial dispersion $\Delta P_{g,F}$ from the normal line of less than or equal to -0.0035, wherein preferably the majority of the lenses having a negative refractive power (L2, L3, L6, L9, L10) comprise all the lenses having a negative refractive power (L2, L3, L6, L9) with the exception of a lens having a negative refractive power (L10) arranged at the image-side end of the rear group (HG).

4. A wide-angle objective in accordance with any one of the preceding claims, wherein the rear group (HG) is formed as a floating element which is preferably shifted in the same direction as the front group (VG) and the middle group (MG) on the focusing, with the shifting distance of the rear group (HG), however, being smaller than the shifting distance of the front group (VG) and of the middle group (MG).

5. A wide-angle objective in accordance with any one of the preceding claims, wherein the first lens and the second lens (L1, L2) form a first subgroup (G1) which is formed as a cemented doublet and/or which has a total refractive power which amounts to no more than 10%, preferably no more than 7.5%, of the total refractive power of the front group (VG), and/or the third lens and the fourth lens (L3, L4) form a second subgroup (G2) which is formed as a cemented doublet.

6. A wide-angle objective in accordance with any one of the preceding claims, wherein the front group (VG), preferably the first lens (L1), has at least one aspherical surface, with in particular at least the object-side surface of the first lens (L1) being aspherical.

7. A wide-angle objective in accordance with any one of the preceding claims, wherein the middle group (MG) comprises, in sequence from an object-side end to an image-side end, at least a fifth lens (L5) having a positive refractive power, a sixth lens (L6) having a negative refractive power, and a seventh lens (L7) having a positive refractive power which are preferably combined to form a cemented triplet, with preferably the lenses having a positive refractive power (L5, L7) being bi-convex and the lenses having a negative refractive power (L6) being bi-concave.

8. A wide-angle objective in accordance with claim 7,

wherein the lenses (L5, L7) of the middle group (MG) having a positive refractive power have an Abbe number of greater than or equal to 65 and/or a deviation of the relative partial dispersion $\Delta P_{g,F}$ from the normal line of greater than or equal to +0.0130, and/or
the lenses (L6) of the middle group (MG) having a negative refractive power have an Abbe number of between 38 and 45 and/or a deviation of the relative partial dispersion $\Delta P_{g,F}$ from the normal line of less than or equal to -0.0035.

9. A wide-angle objective in accordance with any one of the preceding claims, wherein the rear group (HG) comprises, in sequence from an object-side end to an image-side end, at least an eighth lens (L8) having a positive refractive power, a ninth lens (L9) having a negative refractive power, and a tenth lens (L10) having a negative refractive power, with preferably the eighth and ninth lenses (L8, L9) being combined to form a cemented doublet, and/or with preferably the eighth lens (L8) being bi-convex and/or the ninth lens (L9) being bi-concave, and/or the tenth lens (L10) being meniscus-shaped.

10. A wide-angle objective in accordance with claim 9,

wherein the eighth lens (L8) has an Abbe number of between 38 and 45 and/or a refractive index of greater than or equal to 1.80 and less than or equal to 1.86, and/or
the ninth lens (L9) has an Abbe number of between 38 and 45 and/or a deviation of the relative partial dispersion $\Delta P_{g,F}$ from the normal line of less than or equal to -0.0035.

11. A wide-angle objective in accordance with claim 9 or 10,
wherein the object-side surface of the eighth lens (L8) and/or both surfaces of the tenth lens (L10) is/are aspherical.

12. A wide-angle objective in accordance with any one of the preceding claims, wherein the quotient of the diameter of the lens and the center thickness is greater than or equal to 18 for a majority of the lenses having a negative refractive power (L2, L3, L6, L9, L10),
wherein preferably the majority of the lenses having a negative refractive power (L2, L6, L9, L10) comprise all the lenses having a negative refractive power (L2, L6, L9, L10) with the exception of the third lens (L3).

13. A wide-angle objective in accordance with any one of the preceding claims, wherein the quotient of the center thickness and the edge thickness is greater than or equal to 5.8 for each biconvex lens having at least one aspherical surface (L1, L8).

14. A wide-angle objective in accordance with any one of the preceding claims, wherein the front group (VG) comprises a first subgroup (G1) having a positive refractive power and a second subgroup (G2) having a positive refractive power, the middle group (MG) comprises a third subgroup (G3) having a positive refractive power, and the rear group (HG) comprises a fourth subgroup (G4) having a positive refractive power and a fifth subgroup (G5) having a negative refractive power, with each subgroup (G1 - G5) in each case being formed from a plurality of lenses combined to form a cemented compound lens or from a single lens.

15. A wide-angle objective in accordance with any one of the preceding claims, wherein an aperture diaphragm (BL) is arranged between the front group (VG) and the middle group (MG), and/or
the angle of view amounts to 62.2° and the relative aperture amounts to 1:2.0.

## Revendications

1. Objectif photographique grand angle comprenant, dans un ordre allant d'une extrémité côté objet à une extrémité côté image, un groupe avant (VG) de puissance de réfraction totale positive avec au moins quatre lentilles (L1 - L4), un groupe central (MG) de puissance de réfraction totale positive avec au moins trois lentilles (L5 - L7), et un groupe arrière (HG) de puissance de réfraction totale positive avec au moins trois lentilles (L8 - L10), le quotient de la distance focale du groupe avant (VG) par la distance focale totale de l'objectif étant compris entre 2,28 et 2,79, le quotient de la distance focale du groupe central (MG) par la distance focale totale de l'objectif étant compris entre 3,02 et 3,69, et le quotient de la distance focale du groupe arrière (HG) par la distance focale totale de l'objectif étant compris entre 3,50 et 4,29, dans lequel

   le groupe avant (VG) comprend, dans un ordre allant d'une extrémité côté objet à une extrémité côté image, au moins une première lentille (L1) de puissance de réfraction positive, une deuxième lentille (L2) de puissance de réfraction négative, une troisième lentille (L3) de puissance de réfraction négative et une quatrième lentille (L4) de puissance de réfraction positive, les lentilles de puissance de réfraction positive (L1, L4) étant bi-convexes et les lentilles de puissance de réfraction négative (L2, L3) étant bi-concaves, les lentilles (L1 - L4) du groupe avant (VG) présentent un nombre d'Abbe compris entre 38 et 45, les lentilles (L2, L3) du groupe avant (VG), qui présentent une puissance de réfraction négative, présentent un écart de la dispersion partielle relative $\Delta P_{g,F}$ par rapport à la droite normale inférieur ou égal à -0,0035, et la première lentille (L1) présente un indice de réfraction compris entre 1,80 et 1,86, et la quatrième lentille (L4) présente un indice de réfraction supérieur ou égal à 1,86.

2. Objectif grand angle selon la revendication 1, dans lequel
   le groupe avant (VG), le groupe central (MG) et le groupe arrière (HG) comprennent chacun au moins une lentille de puissance de réfraction négative (L2, L3, L6, L9, L10) et au moins une lentille de puissance de réfraction positive (L1, L4, L5, L7, L8).

3. Objectif grand angle selon la revendication 2, dans lequel

   une pluralité des lentilles de puissance de réfraction négative (L2, L3, L6, L9, L10) présentent un indice de réfraction inférieur ou égal à 1,70, un nombre d'Abbe compris entre 38 et 45 et/ou un écart de la dispersion partielle relative $\Delta P_{g,F}$ par rapport à la droite normale inférieur ou égal à -0,0035, de préférence, la pluralité des lentilles de puissance de réfraction négative (L2, L3, L6, L9, L10) comprennent toutes les lentilles de puissance de réfraction négative (L2, L3, L6, L9) à l'exception d'une lentille de puissance de réfraction négative (L10) disposée à l'extrémité côté image du groupe arrière (HG).

4. Objectif grand angle selon l'une des revendications précédentes, dans lequel
   le groupe arrière (HG) est conçu comme un élément flottant qui, de préférence, est déplacé dans le même sens que le groupe avant (VG) et le groupe central (MG) lors de la mise au point, la course du groupe arrière (HG) étant toutefois inférieure à la course du groupe avant (VG) et du groupe central (MG).

5. Objectif grand angle selon l'une des revendications précédentes, dans lequel

   la première et la deuxième lentille (L1, L2) forment un premier sous-groupe (G1) qui est conçu comme un élément collé et/ou présente une puissance de réfraction totale qui n'est pas supérieure à 10 %, de préférence pas supérieure à 7,5 %, de la puissance de réfraction totale du groupe avant (VG), et/ou la troisième et la quatrième lentille (L3, L4) forment un deuxième sous-groupe (G2) qui est conçu comme un élément collé.

6. Objectif grand angle selon l'une des revendications précédentes, dans lequel

   le groupe avant (VG), de préférence la première lentille (L1), présente au moins une surface asphérique,

en particulier, au moins la surface côté objet de la première lentille (L1) est asphérique.

7. Objectif grand angle selon l'une des revendications précédentes, dans lequel

le groupe central (MG) comprend, dans un ordre allant d'une extrémité côté objet à une extrémité côté image, au moins une cinquième lentille (L5) de puissance de réfraction positive, une sixième lentille (L6) de puissance de réfraction négative et une septième lentille (L7) de puissance de réfraction positive, qui sont de préférence combinées en un élément collé,
de préférence, les lentilles de puissance de réfraction positive (L5, L7) sont bi-convexes, et les lentilles de puissance de réfraction négative (L6) sont bi-concaves.

8. Objectif grand angle selon la revendication 7, dans lequel

les lentilles (L5, L7) du groupe central (MG) de puissance de réfraction positive présentent un nombre d'Abbe supérieur ou égal à 65 et/ou un écart de la dispersion partielle relative $\Delta P_{g,F}$ par rapport à la droite normale supérieur ou égal à +0,0130, et/ou
les lentilles (L6) du groupe central (MG) de puissance de réfraction négative présentent un nombre d'Abbe compris entre 38 et 45 et/ou un écart de la dispersion partielle relative $\Delta P_{g,F}$ par rapport à la droite normale inférieur ou égal à -0,0035.

9. Objectif grand angle selon l'une des revendications précédentes, dans lequel

le groupe arrière (HG) comprend, dans un ordre allant d'une extrémité côté objet à une extrémité côté image, au moins une huitième lentille (L8) de puissance de réfraction positive, une neuvième lentille (L9) de puissance de réfraction négative et une dixième lentille (L10) de puissance de réfraction négative,
de préférence, la huitième et la neuvième lentille (L8, L9) sont combinées en un élément collé, et/ou
de préférence, la huitième lentille (L8) est bi-convexe et/ou la neuvième lentille (L9) est bi-concave et/ou la dixième lentille (L10) est en forme de ménisque.

10. Objectif grand angle selon la revendication 9, dans lequel

la huitième lentille (L8) présente un nombre d'Abbe compris entre 38 et 45 et/ou un indice de réfraction supérieur ou égal à 1,80 et inférieur ou égal à 1,86,
et/ou
la neuvième lentille (L9) présente un nombre d'Abbe compris entre 38 et 45 et/ou un écart de la dispersion partielle relative $\Delta P_{g,F}$ par rapport à la droite normale inférieur ou égal à -0,0035.

11. Objectif grand angle selon la revendication 9 ou 10, dans lequel
la surface côté objet de la huitième lentille (L8) et/ou les deux surfaces de la dixième lentille (L10) sont asphériques.

12. Objectif grand angle selon l'une des revendications précédentes, dans lequel

pour une pluralité des lentilles de puissance de réfraction négative (L2, L3, L6, L9, L10), le quotient du diamètre de la lentille par l'épaisseur centrale est supérieur ou égal à 18,
de préférence, la pluralité des lentilles de puissance de réfraction négative (L2, L6, L9, L10) comprennent toutes les lentilles de puissance de réfraction négative (L2, L6, L9, L10) à l'exception de la troisième lentille (L3).

13. Objectif grand angle selon l'une des revendications précédentes, dans lequel
pour chaque lentille bi-convexe présentant au moins une surface asphérique (L1, L8), le quotient de l'épaisseur centrale par l'épaisseur du bord est supérieur ou égal à 5,8.

**14.** Objectif grand angle selon l'une des revendications précédentes,
dans lequel
le groupe avant (VG) comprend un premier sous-groupe (G1) de puissance de réfraction positive et un deuxième sous-groupe (G2) de puissance de réfraction positive, le groupe central (MG) comprend un troisième sous-groupe (G3) de puissance de réfraction positive, et le groupe arrière (HG) comprend un quatrième sous-groupe (G4) de puissance de réfraction positive et un cinquième sous-groupe (G5) de puissance de réfraction négative, chaque sous-groupe (G1 - G5) étant formé de plusieurs lentilles, combinées en un élément collé, ou d'une lentille individuelle.

**15.** Objectif grand angle selon l'une des revendications précédentes,
dans lequel

un diaphragme d'ouverture (BL) est disposé entre le groupe avant (VG) et le groupe central (MG),
et/ou
l'angle de champ est de 62,2° et le rapport d'ouverture est de 1:2,0.

Fig. 1

Fig. 2

MTF          Frequenz: 20 LP/mm

[%]

Relative Bildhöhe

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014104457 B3
- DE 2160628 A
- EP 2194412 A1
- DE 102004008997 A1
- EP 2993512 A1
- US 5835286 A